(19) Europäisches Patentamt
European Patent Office
Office européen des brevets

(11) EP 1 974 606 B1

(12) # EUROPÄISCHE PATENTSCHRIFT

(45) Veröffentlichungstag und Bekanntmachung des Hinweises auf die Patenterteilung:
**10.03.2010 Patentblatt 2010/10**

(51) Int Cl.:
***A01N 41/10*** (2006.01) ***A01N 37/20*** (2006.01)
***A01N 25/32*** (2006.01) ***A01P 7/04*** (2006.01)

(21) Anmeldenummer: **08104508.0**

(22) Anmeldetag: **18.07.2005**

(54) **Selektive Insektizide auf Basis von Phthalsäurediamiden und Safenern**

Selective insecticides based on phthalic acid diamides and safeners

Insecticides sélectifs à base de phtalamides et de phytoprotecteurs

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **20.07.2004 DE 102004035134**

(43) Veröffentlichungstag der Anmeldung:
**01.10.2008 Patentblatt 2008/40**

(62) Dokumentnummer(n) der früheren Anmeldung(en) nach Art. 76 EPÜ:
**05761088.3 / 1 771 072**

(73) Patentinhaber: **Bayer CropScience AG**
**40789 Monheim (DE)**

(72) Erfinder:
- **Fischer, Reiner**
  **40789 Monheim am Rhein (DE)**
- **Fischer, Rüdiger**
  **50259 Pulheim (DE)**
- **Funke, Christian**
  **42799 Leichlingen (DE)**
- **Hense, Achim. Dr**
  **51379 Leverkusen (DE)**
- **Andersch, Wolfram**
  **51469 Bergisch Gladbach (DE)**
- **Hungenberg, Heike**
  **40764 Langenfeld (DE)**
- **Thielert, Wolfgang**
  **51519 Odenthal (DE)**
- **Reckmann, Udo**
  **51063 Köln (DE)**
- **Willms, Lothar**
  **65719 Hofheim am Taunus (DE)**
- **Arnold, Christian**
  **40764 Langenfeld (DE)**

(56) Entgegenhaltungen:
**EP-A- 0 312 763** **EP-A- 1 380 209**
**WO-A-2004/034786**

EP 1 974 606 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft die Verwendung selektiver insektizider und/oder akarizid wirksamer Wirkstoffkombinationen, die Phthalsäurediamide einerseits und zumindest eine die Kulturpflanzen-Verträglichkeit verbessernde Verbindung andererseits enthalten zur selektiven Insekten- und/oder Spinnmilbenbekämpfung in verschiedenen Nutzpflanzenkulturen.

Phthalsäurediamide als Verbindungen mit insektiziden Eigenschaften sind bekannt (vgl. EP-A-0 919 542, EP-A-1 006 107, WO 01/00 575, WO 01/00 599, WO 01/46 124, JP-A 2001-33 555 9, WO 01/02354, WO 01/21 576, WO 02/08 8074, WO 02/08 8075, WO 02/09 4765, WO 02/09 4766, WO 02/06 2807).

Es ist auch bekannt, dass Mischungen aus Phthalsäurediamiden und weiteren bioaktiven Verbindungen eine insektizide und/oder akarizide Wirkung aufweisen (WO 02/087334). Die Wirkung dieser Mischungen ist aber nicht immer optimal.

Überraschenderweise wurde nun gefunden, dass bestimmte Phthalsäurediamide bei gemeinsamer Anwendung mit den im weiteren beschriebenen, die Kulturpflanzen-Verträglichkeit verbessernden Verbindungen (Safenern/ Antidots) ausgesprochen gut die Schädigung der Kulturpflanzen verhindern und besonders vorteilhaft als breit wirksame Kombinationspräparate zur selektiven Bekämpfung von Insekten verwendet werden können.

Gegenstand der Erfindung ist deshalb die Verwendung eines Mittels enthaltend einen wirksamen Gehalt an einer Wirkstoffkombination umfassend als Komponente (a) mindestens ein Phthalsäurediamid der Formel (II) gemäß folgender Tabelle

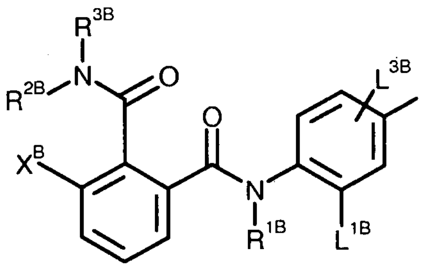

(II)

| $X^B$ | $R^{1B}$ | $R^{2B}$ | $R^{3B}$ | $L^{1B}$ | $L^{2B}$ | $L^{3B}$ |
|---|---|---|---|---|---|---|
| I | H | H | $-C(CH_3)_2CH_2SCH_3$ | $CH_3$ | iso-$C_3F_7$ | H |
| I | H | H | $-C(CH_3)_2CH_2SOCH_3$ | $CH_3$ | iso-$C_3F_7$ | H |
| I | H | H | $-C(CH_3)_2CH_2SO_2CH_3$ | $CH_3$ | iso-$C_3F_7$ | H |
| I | H | H | $-CH(CH_3)CH_2SCH_3$ | $CH_3$ | iso-$C_3F_7$ | H |
| I | H | H | $-CH(CH_3)CH_2SOCH_3$ | $CH_3$ | iso-$C_3F_7$ | H |
| I | H | H | $-CH(CH_3)CH_2SO_2CH_3$ | $CH_3$ | iso-$C_3F_7$ | H |

und als Komponente (b) mindestens eine die Kulturpflanzen-Verträglichkeit verbessernde Verbindung ausgewählt unter Cloquintocet-mexyl, Fenchlorazol-ethyl, Isoxadifen-ethyl, Mefenpyr-diethyl, Furilazole, Fenclorim, Cumyluron, Dymron, Dimepiperate und einer der Verbindungen der folgenden Tabelle

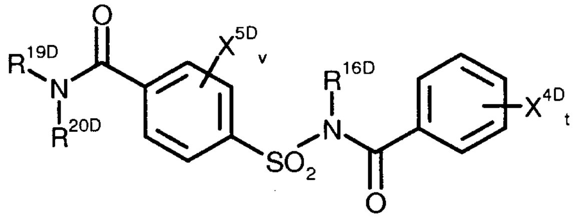

(IV-e)

(fortgesetzt)

| $R^{16D}$ | $R^{19D}$ | $R^{20D}$ | $X^{4D}_t$ | $X^{5D}_v$ |
|---|---|---|---|---|
| H | H | 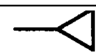 | 2-$OCH_3$ | - |
| H | H | 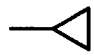 | 2-$OCH_3$, 5-$CH_3$ | - |

Zur Bekämpfung von Insekten- und/oder Spinnentieren.

Die Verbindungen der Formel (II) können, auch in Abhängigkeit von der Art der Substituenten, als geometrische und/oder optische Isomere oder Isomerengemische, in unterschiedlicher Zusammensetzung vorliegen, die gegebenenfalls in üblicher Art und Weise getrennt werden können. Sowohl die reinen Isomeren als auch die Isomerengemische können in den erfindungsgemäßen Mitteln eingesetzt und der erfindungsgemäßen Verwendung zugeführt werden. Im Folgenden wird der Einfachheit halber jedoch stets von Verbindungen der Formel (II) gesprochen, obwohl sowohl die reinen Verbindungen als gegebenenfalls auch Gemische mit unterschiedlichen Anteilen an isomeren Verbindungen gemeint sind.

Im Einzelnen seien die folgenden Verbindungen der Formel (II) genannt:

Tabelle 4:

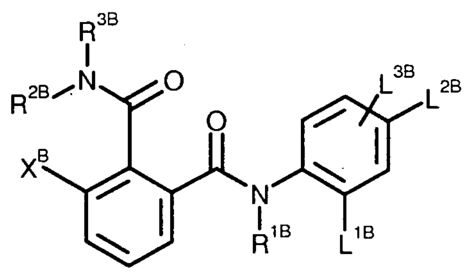

(II)

| Nr. | $X^B$ | $R^{1B}$ | $R^{2B}$ | $R^{3B}$ | $L^{1B}$ | $L^{2B}$ | $L^{3B}$ |
|---|---|---|---|---|---|---|---|
| II-1 | I | H | H | $-C(CH_3)_2CH_2SCH_3$ | $CH_3$ | iso-$C_3F_7$ | H |
| II-2 | I | H | H | $-C(CH_3)_2CH_2SOCH_3$ | $CH_3$ | iso-$C_3F_7$ | H |
| II-3 | I | H | H | $-C(CH_3)_2CH_2SO_2CH_3$ | $CH_3$ | iso-$C_3F_7$ | H |
| II-4 | I | H | H | $-CH(CH_3)CH_2SCH_3$ | $CH_3$ | iso-$C_3F_7$ | H |
| II-5 | I | H | H | $-CH(CH_3)CH_2SOCH3$ | $CH_3$ | iso-$C_3F_7$ | H |
| II-6 | I | H | H | $-CH(CH_3)CH_2SO_2CH_3$ | $CH_3$ | iso-$C_3F_7$ | H |

Als Kulturpflanzen-Verträglichkeit verbessernde Verbindung seien im Einzelnen die folgenden Verbindungen der Formel (IV-e) genannt:

Tabelle 10

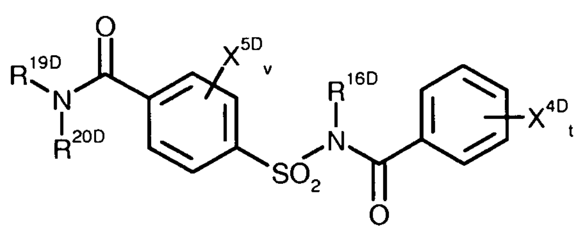

(IV-e)

(fortgesetzt)

| Nr. | $R^{16D}$ | $R^{19D}$ | $R^{20D}$ | $X^{4D}_t$ | $X^{5D}_v$ |
|---|---|---|---|---|---|
| IV-e-5 | H | H | 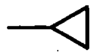 | 2-$OCH_3$ | - |
| IV-e-11 | H | H | 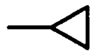 | 2-$OCH_3$,5-$CH_3$ | - |

Die die Kulturpflanzen-Verträglichkeit verbessernden Verbindungen [Komponente (b)] sind Cloquintocet-mexyl, Fenchlorazol-ethyl, Isoxadifen-ethyl, Mefenpyr-diethyl, Furilazole, Fenclorim, Cumyluron, Dymron, Dimepiperate und die Verbindungen IV-e-5 und IV-e-11, wobei Cloquintocet-mexyl und Mefenpyr-diethyl besonders hervorgehoben seien. Besonders hervorgehoben seien außerdem Isoxadifen-ethyl und IV-e-5.

Beispiele für die erfindungsgemäßen selektiv insektiziden und/oder akariziden Kombinationen aus jeweils einer Komponente (a) und jeweils einem der oben definierten Safener sind in der nachstehenden Tabelle aufgeführt.

Tabelle 11 Beispiele für die erfindungsgemäßen Kombinationen

| Wirkstoff der Formel (II) | Safener |
|---|---|
| (II-3) | Cloquintocet-mexyl |
| (II-3) | Fenchlorazole-ethyl |
| (II-3) | Isoxadifen-ethyl |
| (II-3) | Mefenpyr-diethyl |
| (II-3) | Furilazole |
| (II-3) | Fenclorim |
| (II-3) | Cumyluron |
| (II-3) | Daimuron /Dymron |
| (II-3) | Dimepiperate |
| (II-3) | IV-e-11 |
| (II-3) | IV-e-5 |
| (II-6) | Cloquintocet-mexyl |
| (II-6) | Fenchlorazole-ethyl |
| (II-6) | Isoxadifen-ethyl |
| (II-6) | Mefenpyr-diethyl |
| (II-6) | Furilazole |
| (II-6) | Fenclorim |
| (II-6) | Cumyluron |
| (II-6) | Daimuron /Dymron |
| (II-6) | Dimepiperate |
| (II-6) | IV-e-11 |
| (II-6) | IV-e-5 |

Die als Safener zu verwendenden Verbindungen der allgemeinen Formel (IV-e) sind bekannt und/ oder können nach an sich bekannten Verfahren hergestellt werden (vgl. WO 99/66795, US 6,251,827).

Es wurde nun überraschend gefunden, dass die oben definierten Wirkstoffkombinationen aus Phthalsäurediamiden der Formel (II) und Safenern (Antidots) aus der oben aufgeführten Gruppe (b) bei sehr guter Nutzpflanzen-Verträglichkeit eine gute insektizide und/oder akarizide Wirksamkeit aufweisen und in verschiedenen Kulturen zur selektiven Insektenbekämpfung verwendet werden können.

Dabei ist es als völlig überraschend anzusehen, dass Verbindungen aus der oben aufgeführten Gruppe (b) befähigt sind, die insektizide und/oder akarizide Wirksamkeit der Phthalsäurediamide der allgemeinen Formel (II) teilweise zu verstärken, so dass eine synergistische Wirkung zu verzeichnen ist.

Die Wirkstoffkombinationen können z.B. bei den folgenden Pflanzen verwendet werden:

Dikotyle Kulturen der Gattungen: Gossypium, Glycine, Beta, Daucus, Phaseolus, Pisum, Solanum, Linum, Ipomoea, Vicia, Nicotiana, Lycopersicon, Arachis, Brassica, Lactuca, Cucumis, Cuburbita, Helianthus.

Monokotyle Kulturen der Gattungen: Oryza, Zea, Triticum, Hordeum, Avena, Secale, Sorghum, Panicum, Saccharum, Ananas, Asparagus, Allium.

Die Verwendung der Wirkstoffkombinationen ist jedoch keineswegs auf diese Gattungen beschränkt, sondern erstreckt sich in gleicher Weise auch auf andere Pflanzen.

Der vorteilhafte Effekt der Kulturpflanzen-Verträglichkeit der Wirkstoffkombinationen ist bei bestimmten Konzentrationsverhältnissen besonders stark ausgeprägt. Jedoch können die Gewichtsverhältnisse der Wirkstoffe in den Wirkstoffkombinationen in relativ großen Bereichen variiert werden. Im Allgemeinen entfallen auf 1 Gewichtsteil Wirkstoff der Formel (II) 0,001 bis 1000 Gewichtsteile, vorzugsweise 0,01 bis 100 Gewichtsteile, besonders bevorzugt 0,05 bis 10 Gewichtsteile und am meisten bevorzugt 0,07 bis 1,5 Gewichtsteile einer der oben unter (b) genannten, die Kulturpflanzen Verträglichkeit verbessernden Verbindungen (Antidots/Safener).

Die Wirkstoffe bzw. Wirkstoffkombinationen können in die üblichen Formulierungen übergeführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff imprägnierte Natur- und synthetische Stoffe sowie Feinstverkapselungen in polymeren Stoffen.

Diese Formulierungen werden in bekannter Weise hergestellt, z. B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen infrage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstängeln; als Emulgier- und/oder schaumerzeugende Mittel kommen in Frage: z.B. nicht-ionogene und anionische Emulgatoren, wie Polyoxyethylen-Fettsäure-Ester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im Allgemeinen zwischen 0,1 und 95 Gewichtsprozent an Wirkstoffen einschließlich der safenden Wirkstoffe, vorzugsweise zwischen 0,5 und 90 %.

Die Wirkstoffkombinationen werden im Allgemeinen in Form von Fertigformulierungen zur Anwendung gebracht. Die in den Wirkstoffkombinationen enthaltenen Wirkstoffe können aber auch in Einzelformulierungen bei der Anwendung gemischt, d.h. in Form von Tankmischungen zur Anwendung gebracht werden.

Die Wirkstoffkombinationen können als solche oder in ihren Formulierungen weiterhin auch in Mischung mit anderen bekannten Herbiziden Verwendung finden, wobei wiederum Fertigformulierungen oder Tankmischungen möglich sind. Auch eine Mischung mit anderen bekannten Wirkstoffen, wie Fungiziden, Insektiziden, Akariziden, Nematiziden, Lockstoffen, Sterilantien, Bakteriziden, Schutzstoffen, gegen Vogelfraß, Wuchsstoffen, Pflanzennährstoffen und Bodenstruktur-Verbesserungsmitteln ist möglich. Für bestimmte Anwendungszwecke, insbesondere im Nachauflauf-Verfahren, kann es ferner vorteilhaft sein, in die Formulierungen als weitere Zusatzstoffe pflanzenverträgliche mineralische

oder vegetabilische Öle (z.B. das Handelspräparat "Rako Binol") oder Ammoniumsalze wie z.B. Ammoniumsulfat oder Ammoniumrhodanid aufzunehmen.

Die Wirkstoffkombinationen können als solche, in Form ihrer Formulierungen oder der daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Stäuben oder Streuen.

Die Aufwandmengen der Wirkstoffkombinationen können in einem gewissen Bereich variiert werden; sie hängen u.a. vom Wetter und von den Bodenfaktoren ab. Im Allgemeinen liegen die Aufwandmengen zwischen 0,005 und 5 kg pro ha, vorzugsweise zwischen 0,01 und 2 kg pro ha, besonders bevorzugt zwischen 0,05 und 1,0 kg pro ha.

Die Wirkstoffkombinationen können vor und nach dem Auflaufen der Pflanzen appliziert werden, also im Vorauflauf und Nachauflauf-Verfahren.

Die einzusetzenden Safener können je nach ihren Eigenschaften zur Vorbehandlung des Saatgutes der Kulturpflanze (Beizung der Samen) verwendet werden oder vor der Saat in die Saatfurchen eingebracht oder zusammen mit dem Herbizid vor oder nach dem Ablaufen der Pflanzen angewendet werden.

Die Wirkstoffkombinationen eignen sich zur Bekämpfung von tierischen Schädlingen, vorzugsweise Arthropoden und Nematoden, insbesondere Insekten und Spinnentieren, die in der Landwirtschaft, der Tiergesundheit in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spp..

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Acheta domesticus, Gryllotalpa spp., Locusta migratoria migratorioides, Melanoplus spp., Schistocerca gregaria.

Aus der Ordnung der Blattaria z.B. Blatta orientalis, Periplaneta americana, Leucophaea maderae, Blattella germanica.

Aus der Ordnung der Dermaptera z.B. Forficula auricularia.

Aus der Ordnung der Isoptera z.B. Reticulitermes spp..

Aus der Ordnung der Phthiraptera z.B. Pediculus humanus corporis, Haematopinus spp., Linognathus spp., Trichodectes spp., Damalinia spp..

Aus der Ordnung der Thysanoptera z.B. Hercinothrips femoralis, Thrips tabaci, Thrips palmi, Frankliniella occidentalis.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Aphis pomi, Eriosoma lanigerum, Hyalopterus arundinis, Phylloxera vastatrix, Pemphigus spp., Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp.

Aus der Ordnung der Lepidoptera z.B. Pectinophora gossypiella, Bupalus piniarius, Cheimatobia brumata, Lithocolletis blancardella, Hyponomeuta padella, Plutella xylostella, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Mamestra brassicae, Panolis flammea, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana, Cnaphalocerus spp., Oulema oryzae.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica, Lissorhoptrus oryzophilus.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca

spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa, Hylemyia spp., Liriomyza spp.

Aus der Ordnung der Siphonaptera z.B. Xenopsylla cheopis, Ceratophyllus spp.

Aus der Klasse der Arachnida z.B. Scorpio maurus, Latrodectus mactans, Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp., Hemitarsonemus spp., Brevipalpus spp.

Zu den pflanzenparasitären Nematoden gehören z.B. Pratylenchus spp., Radopholus similis, Ditylenchus dipsaci, Tylenchulus semipenetrans, Heterodera spp., Globodera spp., Meloidogyne spp., Aphelenchoides spp., Longidorus spp., Xiphinema spp., Trichodorus spp., Bursaphelenchus spp.

Die Wirkstoffkombinationen können ferner beim Einsatz als Insektizide in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne dass der zugesetzte Synergist selbst aktiv wirksam sein muss.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepassten üblichen Weise.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft, Blätter, Nadeln, Stängel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhiozome, Ableger und Samen.

Die erfindungsgemäße Behandlung der Pflanzen und Pflanzenteile mit den Wirkstoffen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen, weiterhin durch ein- oder mehrschichtiges Umhüllen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetic Modified Organisms) und deren Teile behandelt. Der Begriff "Teile" bzw. "Teile von Pflanzen" oder "Pflanzenteile" wurde oben erläutert.

Besonders bevorzugt werden erfindungsgemäß Pflanzen der jeweils handelsüblichen oder in Gebrauch befindlichen Pflanzensorten behandelt.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Raps sowie Obstpflanzen (mit den Früchten Äpfel, Birnen, Zitrusfrüchten und Weintrauben) erwähnt, wobei Mais, Soja, Kartoffel, Baumwolle und Raps besonders hervorgehoben werden. Als Eigenschaften ("Traits") werden besonders hervorgehoben die erhöhte Abwehr der Pflanzen gegen Insekten durch in den Pflanzen entstehende Toxine, insbesondere solche, die durch das genetische Material aus Bacillus Thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im Folgenden "Bt Pflanzen"). Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die aufgeführten Pflanzen können besonders vorteilhaft erfindungsgemäß mit den Wirkstoffmischungen behandelt werden. Die bei den Mischungen oben angegebenen Vorzugsbereiche gelten auch für die Behandlung dieser Pflanzen. Besonders hervorgehoben sei die Pflanzenbehandlung mit den im vorliegenden Text speziell aufgeführten Mischungen.

**Berechnungsformel für den Abtötungsgrad einer Kombination aus zwei Wirkstoffen**

Die zu erwartende Wirkung für eine gegebene Kombination zweier Wirkstoffe kann (vgl. Colby, S.R., "Calculating Synergistic and Antagonistic Responses of Herbicide Combinations", Weeds 15, Seiten 20-22, 1967) wie folgt berechnet werden:
Wenn

X den Abtötungsgrad, ausgedrücht in % der unbehandelten Kontrolle, beim Einsatz des Wirkstoffes A in einer Aufwandmenge von m ppm,

Y den Abtötungsgrad, ausgedrückt in % der unbehandelten Kontrolle, beim Einsatz des Wirkstoffes B in einer Aufwandmenge von n ppm,

E den Abtötungsgrad, ausgedrückt in % der unbehandelten Kontrolle, beim Einsatz des Wirkstoffes A und B in Aufwandmengen von m und n ppm bedeutet,

$$\text{dann ist } E = X + Y - \frac{X \times Y}{100}$$

Ist der tatsächliche insektizide Abtötungsgrad größer als berechnet, so ist die Kombination in ihrer Abtötung überadditiv, d.h. es liegt ein synergistischer Effekt vor. In diesem Fall muß der tatsächlich beobachtete Abtötungsgrad größer sein als der aus der oben angeführten Formel errechnete Wert für den erwarteten Abtötungsgrad (E).

**Beispiele zur Spritzbehandlung - tropfnass**

Lösungsmittel: Wasser

Adjuvant: Rapsölmethylester

Zur Herstellung einer zweckmäßigen Lösung vermischt man 1 Gewichtsteil Formulierung mit der angegebenen Menge Wasser und Adjuvant und verdünnt das Konzentrat mit Wasser auf die gewünschte Konzentration.

Heliothis armigera Test

Baumwollpflanzen (*Gossypium hirsutum*) werden mit der gewünschten Anwendungskonzentration tropfnass gespritzt und mit Raupen des Baumwollkapselwurms (*Heliothis armigera*) besetzt, solange die Blätter noch feucht sind.

Spodoptera frugiperda test

Maispflanzen (*Zea mais*) werden mit der gewünschten Anwendungskonzentration tropfnass gespritzt und mit Raupen des Heerwurms (*Spodoptera frugiperda*) besetzt, solange die Blätter noch feucht sind.

Plutella xylostella test

Kohlpflanzen (*Brassica pekinesis*) werden mit der gewünschten Anwendungskonzentration tropfnass gespritzt und mit Larven der Kohlmotte (*Plutella xylostella*) besetzt, solange die Blätter noch feucht sind.

Nach der gewünschten Zeit wird die Abtötung in % bestimmt. Dabei bedeutet 100 %, dass alle Larven abgetötet wurden; 0 % bedeutet, dass keine Larven abgetötet wurden. Die ermittelten Abtötungswerte verrechnet man nach der Colby-Formel (siehe oben).

Bei diesem Test zeigen z. B. die folgenden Kombinationen gemäß vorliegender Anmeldung eine synergistisch verstärkte Wirksamkeit im Vergleich zu den einzeln angewendeten Komponenten:

**Tabelle A1**

**Pflanzenschädigende Insekten, Heliothis armigera - Test**

| Formulierung | Konzentration in ppm | Abtötung in % nach $7^d$ | |
|---|---|---|---|
| II-6 | 0,032 | 50 | |
| **Isoxadifen-ethyl WG 50** | 25 | 0 | |
| II-6 + Isoxadifen-ethyl (1 : 781,25) | | gef.* | ber.** |
| Erfindungsgemäß | 0,032 + 25 | 100 | 50 |
| IV-e-5 a.i. | 100 | 0 | |
| II-6 + IV-e-5 (1 : 3125) | | gef.* | ber.** |
| Erfindungsgemäß | 0,032 + 100 | 100 | 50 |
| Dichlormid a.i. | 100 | 0 | |
| II-6 + Dichlormid (1 : 3125) | | gef.* | ber.** |
| erfindungsgemäß | 0,032 + 100 | 100 | 50 |
| Furilazole a.i. | 25 | 0 | |
| II-6 + Furilazole (1 : 781,25) | | gef.* | ber.** |
| erfindungsgemäß | 0,032 + 25 | 100 | 50 |

*gef. = gefundene Wirkung
** ber. = nach der Colby-Formel berechnete Wirkung

**Tabelle A2**

**Pflanzenschädigende Insekten, Heliothis armigera - Test**

| Formulierung | Konzentration in ppm | Abtötung in % nach $3^d$ | |
|---|---|---|---|
| II-3 | 0,16 | 60 | |
| **Isoxadifen-ethyl WG 50** | 100 | 0 | |
| II-3 + Isoxadifen-ethyl (1 : 625) | | gef.* | ber.** |
| erfindungsgemäß | 0,16 + 100 | 83 | 60 |
| **Mefenpyr WG 15** | 100 | 0 | |
| II-3 + Mefenpyr (1 : 625) | | gef.* | ber.** |
| erfindungsgemäß | 0,16 + 100 | 100 | 60 |

(fortgesetzt)

| Pflanzenschädigende Insekten, Heliothis armigera - Test | | | |
|---|---|---|---|
| Formulierung | Konzentration in ppm | Abtötung in % nach $3^d$ | |
| IV-e-5 a.i. | 50 | 0 | |
| II-3 + IV-e-5 (1 : 312,5) | | gef.* | ber.** |
| Erfindungsgemäß | 0,16 + 50 | 83 | 60 |
| Cloquintocet-mexyl WP 20 | 50 | 0 | |
| II-3 + Cloquintocet-mexyl (1 : 312,5) | | gef.* | ber.** |
| erfindungsgemäß | 0,16 + 50 | 100 | 60 |
| Dichlormid a.i. | 100 | 0 | |
| II-3 + Dichlormid (1 : 625) | | gef.* | ber.** |
| erfindungsgemäß | 0,16 + 100 | 83 | 60 |
| Fenclorim a.i. | 100 | 0 | |
| II-3 + Fenclorim (1 : 625) | | gef.* | ber.** |
| erfindungsgemäß | 0,16 + 100 | 100 | 60 |
| Furilazole a.i. | 50 | 0 | |
| II-3 + Furilazole (1 : 312,5) | | gef.* | ber.** |
| erfindungsgemäß | 0,16 + 50 | 100 | 60 |

*gef. = gefundene Wirkung
** ber. = nach der Colby-Formel berechnete Wirkung

**Tabelle B1**

| Pflanzenschädigende Insekten, Plutella xylostella - Test | | | |
|---|---|---|---|
| Formulierung | Konzentration in ppm | Abtötung in % nach $7^d$ | |
| II-6 | 0,032 | 33 | |
| IV-e-5 a.i. | 100 | 0 | |
| II-6 + IV-e-5 (1 : 3125) | | gef.* | ber.** |
| erfindungsgemäß | 0,032 + 100 | 100 | 33 |
| Fenclorim a.i. | 25 | 0 | |
| 11-6 + Fenclorim (1 : 781,25) | | gef.* | ber.** |
| erfindungsgemäß | 0,032 + 25 | 60 | 33 |
| Furilazole a.i. | 50 | 0 | |
| II-6 + Furilazole (1 : 1562,5) | | gef.* | ber.** |
| erfindungsgemäß | 0,032 + 50 | 100 | 33 |

*gef. = gefundene Wirkung
** ber. = nach der Colby-Formel berechnete Wirkung

**Tabelle B2**

| Pflanzenschädigende Insekten, Plutella xylostella - Test | | | |
|---|---|---|---|
| Formulierung | Konzentration in ppm | Abtötung in % nach $3^d$ | |
| II-3 | 0,032 | 30 | |
| **Isoxadifen-ethyl WG 50** | 100 | 0 | |
| II-3 + Isoxadifen-ethyl (1 : 3125) | | gef.* | ber.** |
| erfindungsgemäß | 0,032 + 100 | 83 | 30 |

(fortgesetzt)

**Pflanzenschädigende Insekten, Plutella xylostella - Test**

| Formulierung | Konzentration in ppm | Abtötung in % nach 3d | |
|---|---|---|---|
| **Mefenpyr WG 15** | 50 | 0 | |
| II-3 + Mefenpyr (1 : 1562,5) | | gef.* | ber.** |
| erfindungsgemäß | 0,032 + 50 | 60 | 30 |
| Cloquintocet-mexyl WP 20 | 50 | 0 | |
| II-3+Cloquintocet-mexyl(1 : 1562,5) | | gef.* | ber.** |
| erfindungsgemäß | 0,032 + 50 | 90 | 30 |
| Dichlormid a.i. | 100 | 0 | |
| II-3 + Dichlormid (1 : 3125) | | gef.* | ber.** |
| erfindungsgemäß 0,032 + 100 | 50 | 30 | |

*gef. = gefundene Wirkung
** ber. = nach der Colby-Formel berechnete Wirkung

**Tabelle C1**

**Pflanzenschädigende Insekten, Spodoptera frugiperda - Test**

| Formulierung | Konzentration in ppm | Abtötung in % nach 7d | |
|---|---|---|---|
| II-6 | 0,032 | 0 | |
| **Isoxadifen-ethyl WG 50** | 50 | 0 | |
| II-6 + Isoxadifen-ethyl (1 : 1562,5) | | gef.* | ber.** |
| erfindungsgemäß | 0,032 + 50 | 66 | 0 |
| **Mefenpyr WG 15** | 25 | 0 | |
| II-6 + Mefenpyr (1 : 781,25) | | gef.* | ber.** |
| erfindungsgemäß | 0,032 + 25 | 100 | 0 |
| IV-e-5 a.i. | 100 | 0 | |
| II-6 + IV-e-5 (1 : 3125) | | gef.* | ber.** |
| erfindungsgemäß | 0,032 + 100 | 100 | 0 |

*gef. = gefundene Wirkung
** ber. = nach der Colby-Formel berechnete Wirkung

**Tabelle C2**

**Pflanzenschädigende Insekten, Spodoptera frugiperda - Test**

| Formulierung | Konzentration in ppm | Abtötung in % nach 3d | |
|---|---|---|---|
| II-3 | 0,16 | 50 | |
| **Isoxadifen-ethyl WG 50** | 100 | 0 | |
| II-3 + Isoxadifen-ethyl (1 : 625) | | gef.* | ber.** |
| erfindungsgemäß | 0,16 + 100 | 100 | 50 |
| **Mefenpyr WG 15** | 100 | 0 | |
| II-3 + Mefenpyr (1 : 625) | | gef.* | ber.** |
| erfindungsgemäß | 0,16 + 100 | 100 | 50 |
| IV-e-5 a.i. | 100 | 0 | |
| II-3 + IV-e-5 (1 : 625) | | gef.* | ber.** |
| erfindungsgemäß | 0,16 + 100 | 100 | 50 |

(fortgesetzt)

**Pflanzenschädigende Insekten, Spodoptera frugiperda - Test**

| Formulierung | Konzentration in ppm | Abtötung in % nach $3^d$ | |
|---|---|---|---|
| Cloquintocet-mexyl WP 20 | 50 | 0 | |
| II-3 + Cloquintocet-mexyl (1 : 312,5)<br>erfindungsgemäß | <br>0,16 + 50 | gef.*<br>83 | ber.**<br>50 |
| Dichlormid a.i. | 100 | | 0 |
| II-3 + Dichlormid (1 : 625)<br>erfindungsgemäß | <br>0,16 + 100 | gef.*<br>100 | ber.**<br>50 |
| Fenclorim a.i. | 100 | | 0 |
| II-3 + Fenclorim (1 : 625)<br>erfindungsgemäß | <br>0,16 + 100 | gef.*<br>83 | ber.**<br>50 |
| Furilazole a.i. | 100 | | 0 |
| II-3 + Furilazole (1 : 625)<br>Erfindungsgemäß | <br>0,16 + 100 | gef.*<br>100 | ber.**<br>50 |

*gef. = gefundene Wirkung
** ber. = nach der Colby-Formel berechnete Wirkung

## Patentansprüche

1. Verwendung eines Mittels enthaltend einen wirksamen Gehalt an einer Wirkstoffkombination umfassend als Komponente (a) mindestens ein Phthalsäurediamid der Formel (II) gemäß folgender Tabelle

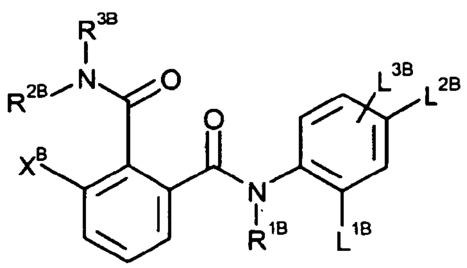

(II)

| $X^B$ | $R^{1B}$ | $R^{2B}$ | $R^{3B}$ | $L^{1B}$ | $L^{2B}$ | $L^{3B}$ |
|---|---|---|---|---|---|---|
| I | H | H | $-C\ (CH_3)_2CH_2SCH_3$ | $CH_3$ | iso-$C_3F_7$ | H |
| I | H | H | $-C\ (CH_3)_2CH_2SOCH_3$ | $CH_3$ | iso-$C_3F_7$ | H |
| I | H | H | $-C\ (CH_3)_2CH_2SO_2CH_3$ | $CH_3$ | iso-$C_3F_7$ | H |
| I | H | H | $-CH(CH_3)CH_2SCH_3$ | $CH_3$ | iso-$C_3F_7$ | H |
| I | H | H | $-CH(CH_3)CH_2SOCH_3$ | $CH_3$ | iso-$C_3F_7$ | H |
| I | H | H | $-CH(CH_3)CH_2SO_2CH_3$ | $CH_3$ | iso-$C_3F_7$ | H |

und als Komponente (b) zumindest eine die Kulturpflanzen-Verträglichkeit verbessernde Verbindung ausgewählt unter Cloquintocet-mexyl, Fenchlorazol-ethyl, Isoxadifen-ethyl, Mefenpyr-diethyl, Furilazole, Fenclorim, Cumyluron, Dymron, Dimepiperate und einer der Verbindungen der folgenden Tabelle

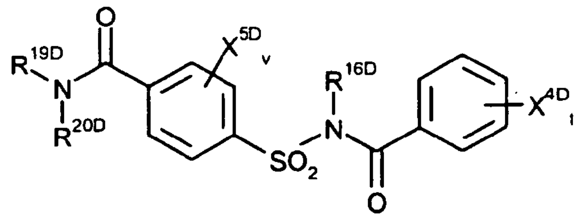

(IV-e)

| $R^{16D}$ | $R^{19D}$ | $R^{20D}$ | $X^{4D}_t$ | $x^{5D}_v$ |
|---|---|---|---|---|
| H | H | 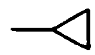 | 2-$OCH_3$ | - |
| H | H | 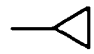 | 2-$OCH_3$, S-$CH_3$ | - |

zur Bekämpfung von Insekten- und/oder Spinnentieren.

**2.** Verwendung nach Anspruch 1, wobei die Wirkstoffkombination als Komponenten (a) mindestens ein Phthalsäurediamid wie in Anspruch 1 definiert enthält und als Komponente (b) zumindest eine die Kulturpflanzen-Verträglichkeit verbessernde Verbindung ausgewählt unter Cloquintocet-mexyl, Isoxadifen-ethyl, Mefenpyr-diethyl und der folgenden Verbindung

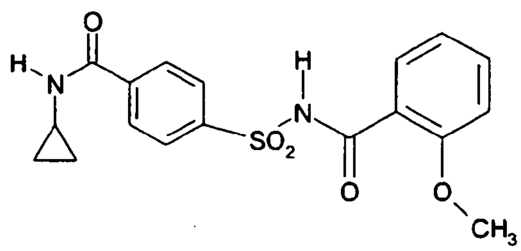

(IV-e-5)

enthält.

**3.** Verwendung nach Anspruch 1, wobei die Wirkstoffkombination als Komponente (a) ein Phthalsäurediamid der Formel (II) enthält, worin $X^B$ für Iod, $R^{1B}$, $R^{2B}$ und $L^{3B}$ jeweils für H stehen, $R^{3B}$ für eine Gruppierung -C$(CH_3)_2CH_2SO_2CH_3$, $L^{1B}$ für $CH_3$ und $L^{2B}$ für iso-$C_3F_7$ steht und als Komponente (b) eine die Kulturpflanzen-Verträglichkeit verbessernde Verbindung ausgewählt unter Isoxadifen-ethyl, Mefenpyr-diethyl, Cloquintocet-mexyl und der folgenden Verbindung

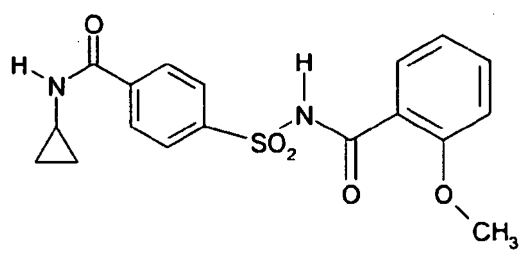

(IV-e-5)

enthält.

**4.** Verwendung nach Anspruch 1, wobei die Wirkstoffkombination als Komponente (a) ein Phthalsäurediamid der Formel (II) enthält, worin $X^B$ für Iod, $R^{1B}$, $R^{2B}$ und $L^{3B}$ jeweils für H stehen, $R^{3B}$ für eine Gruppierung -CH$(CH_3)$

$CH_2SO_2CH_3$, $L^{1B}$ für $CH_3$ und $L^{2B}$ für iso-$C_3F_7$ steht und als Komponente (b) eine die Kulturpflanzen-Verträglichkeit verbessernde Verbindung ausgewählt unter Isoxadifen-ethyl, Mefenpyr-diethyl, Cloquintocet-mexyl und der folgenden Verbindung

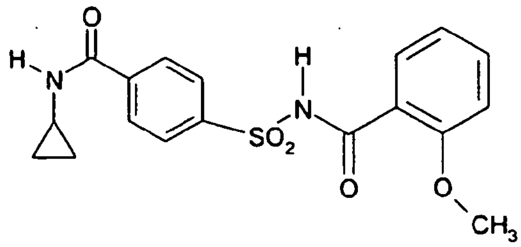

(IV-e-5)

enthält.

**5.** Verfahren zur Bekämpfung von Insekten und/oder Akariden, **dadurch gekennzeichnet, dass** man Mittel wie in einem der Ansprüche 1 bis 4 definiert auf Insekten und/oder Spinnentiere und/oder deren Lebensraum einwirken lässt.

**Claims**

**1.** Use of a composition comprising an effective amount of an active compound combination comprising, as component (a), at least one phthalic acid diamide of the formula (II) according to the table below

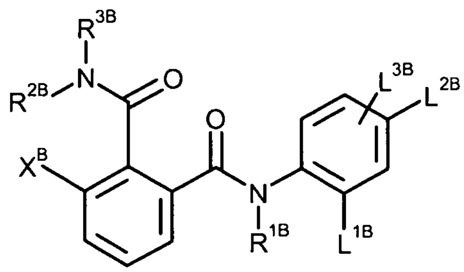

(II)

| $X^B$ | $R^{1B}$ | $R^{2B}$ | $R^{3B}$ | $L^{1B}$ | $L^{2B}$ | $L^{3B}$ |
|---|---|---|---|---|---|---|
| I | H | H | $-C(CH_3)_2CH_2SCH_3$ | $CH_3$ | iso-$C_3F_7$ | H |
| I | H | H | $-C(CH_3)_2CH_2SOCH_3$ | $CH_3$ | iso-$C_3F_7$ | H |
| I | H | H | $-C(CH_3)_2CH_2SO_2CH_3$ | $CH_3$ | iso-$C_3F_7$ | H |
| I | H | H | $-CH(CH_3)CH_2SCH_3$ | $CH_3$ | iso-$C_3F_7$ | H |
| I | H | H | $-CH(CH_3)CH_2SOCH_3$ | $CH_3$ | iso-$C_3F_7$ | H |
| I | H | H | $-CH(CH_3)CH_2SO_2CH_3$ | $CH_3$ | iso-$C_3F_7$ | H |

and, as component (b), at least one crop plant compatibility-improving compound selected from cloquintocet-mexyl, fenchlorazole-ethyl, isoxadifen-ethyl, mefenpyr-diethyl, furilazole, fenclorim, cumyluron, dymron, dimepiperate and one of the compounds of the table below

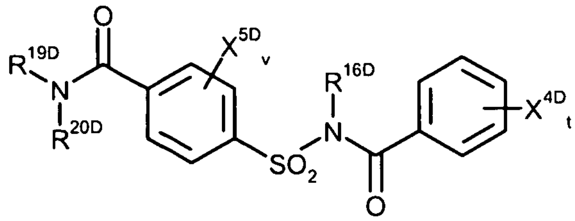

(IV-e)

| $R^{16D}$ | $R^{19D}$ | $R^{20D}$ | $X^{4D}{}_t$ | $X^{5D}{}_v$ |
|---|---|---|---|---|
| H | H | 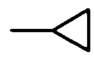 | 2-$OCH_3$ | - |
| H | H | 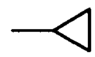 | 2-$OCH_3$, 5-$CH_3$ | - |

for controlling insects and/or arachnids.

**2.** Use according to claim 1, where the active compound combination comprises, as component (a), at least one phthalic acid diamide as defined in Claim 1 and, as component (b), at least one crop plant compatibility-improving compound selected from cloquintocet-mexyl, isoxadifen-ethyl, mefenpyr-diethyl and the compound below

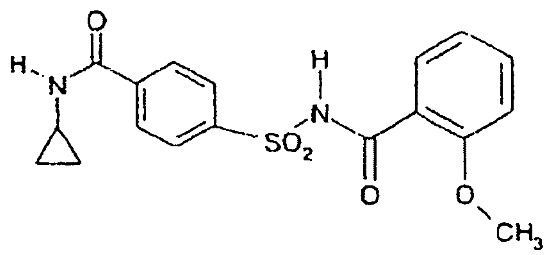

(IV-e-5) .

**3.** Use according to Claim 1, where the active compound combination comprises, as component (a), a phthalic acid diamide of the formula (II) in which $X^B$ represents iodine, $R^{1B}$, $R^{2B}$ and $L^{3B}$ each can represent H, $R^{3B}$ represents a grouping $-C(CH_3)_2CH_2SO_2CH_3$, $L^{1B}$ represents $CH_3$ and $L^{2B}$ represents iso-$C_3F_7$, and, as component (b), a crop plant compatibility-improving compound selected from isoxadifen-ethyl, mefenpyr-diethyl, cloquintocet-mexyl and the compound below

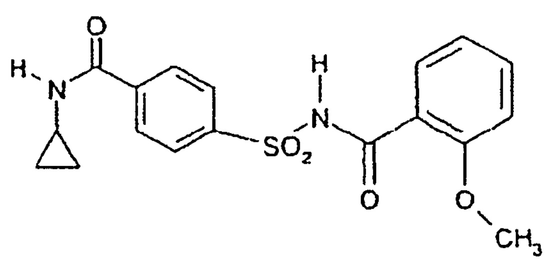

(IV-e-5) .

**4.** Use according to Claim 1, where the active compound combination comprises, as component (a), a phthalic acid diamide of the formula (II) in which $X^B$ represents iodine, $R^{1B}$, $R^{2B}$ and $L^{3B}$ each represent H, $R^{3B}$ represents a grouping $-CH(CH_3)CH_2SO_2CH_3$, $L^{1B}$ represents $CH_3$ and $L^{2B}$ represents iso-$C_3F_7$, and, as component (b), a crop plant compatibility-improving compound selected from isoxadifen-ethyl, mefenpyr-diethyl, cloquintocet-mexyl and the compound below

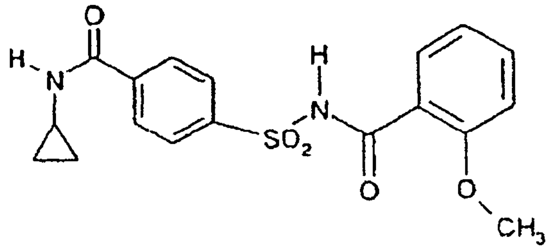

(IV-e-5) .

5. Method for controlling insects and/or acarids, **characterized in that** compositions as defined in one of Claims 1 to 4 are allowed to act on insects and/or arachnids and/or their habitat.

## Revendications

1. Utilisation d'un agent contenant une teneur active d'une combinaison de principes actifs comprenant comme constituant (a) au moins un diamide d'acide phtalique de la formule (II) selon le tableau suivant

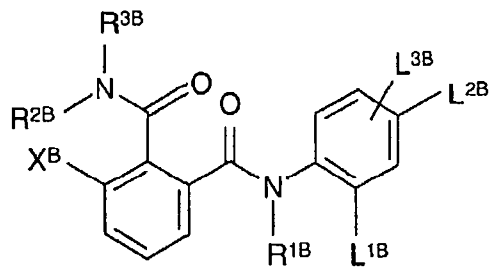

(II)

| $X^B$ | $R^{1B}$ | $R^{2B}$ | $R^{3B}$ | $L^{1B}$ | $L^{2B}$ | $L^{3B}$ |
|---|---|---|---|---|---|---|
| 1 | H | H | $-C\ (CH_3)_2CH_2SCH_3$ | $CH_3$ | iso-$C_3F_7$ | H |
| 1 | H | H | $-C\ (CH_3)_2CH_2SOCH_3$ | $CH_3$ | iso-$C_3F_7$ | H |
| 1 | H | H | $-C\ (CH_3)_2CH_2SO_2CH_3$ | $CH_3$ | iso-$C_3F_7$ | H |
| 1 | H | H | $-CH(CH_3)CH_2SCH_3$ | $CH_3$ | iso-$C_3F_7$ | H |
| 1 | H | H | $-CH(CH_3)CH_2SOCH_3$ | $CH_3$ | iso-$C_3F_7$ | H |
| 1 | H | H | $-CH(CH_3)CH_2SO_2CH_3$ | $CH_3$ | iso-$C_3F$, | H |

et comme constituant (b) au moins un composé améliorant la compatibilité aux plantes de culture choisi parmi le cloquintocet-méxyle, le fenchlorazol-éthyle, l'isoxadifen-éthyle, le méfempyr-diéthyle, le furilazole, le fenchlorim, le cumyluron, le dymron, le dimépipérate et un des composés du tableau suivant

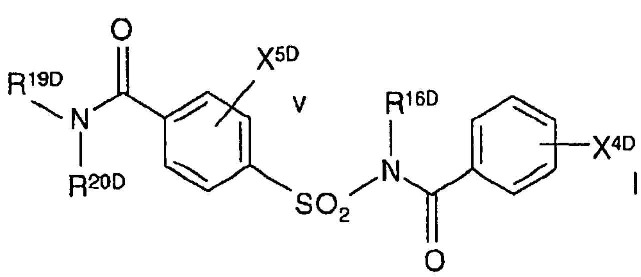

(IV-e)

(suite)

| $R^{16D}$ | $R^{19D}$ | $R^{20D}$ | $X^{4D}{}_{l}$ | $X^{5D}{}_{v}$ |
|---|---|---|---|---|
| H | H | 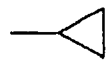 | 2-$OCH_3$ | - |
| H | H | 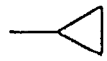 | 2-$OCH_3$, 5-$CH_3$ | - |

pour combattre des insectes et/ou des araignées.

**2.** Utilisation selon la revendication 1, dans laquelle la combinaison de principes actifs contient comme constituant (a) au moins un diamide d'acide phtalique comme défini dans la revendication 1 et comme constituant (b) au moins un composé améliorant la compatibilité aux plantes de culture choisi parmi le cloquintocet-mexyle, l'isoxadifen-éthyle, le méfenpyr-diéthyle et le composé suivant.

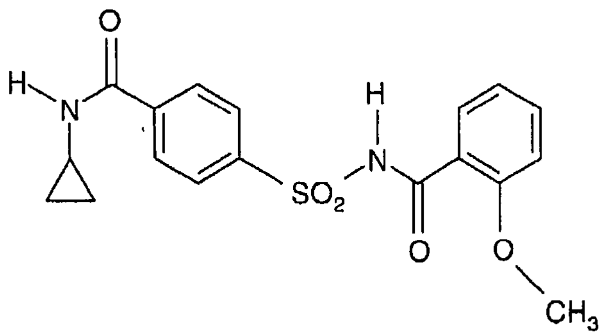

(IV-e-5)

**3.** Utilisation selon la revendication 1, dans laquelle la combinaison de principes actifs contient comme constituant (a) un diamide d'acide phtalique de la formule (II), dans laquelle $X^B$ représente l'iode, $R^{1B}$, $R^{2B}$ et $L^{3B}$ représentent à chaque fois H, $R^{3B}$ représente un groupement $-C(CH_3)_2CH_2SO_2CH_3$, $L^{1B}$ représente $CH_3$ et $L^{2B}$ représente iso-$C_3F_7$ et contient comme constituant (b) un composé améliorant la compatibilité aux plantes de culture choisi parmi l'isoxadifen-éthyle, le méfenpyr-éthyle, le cloquintocet-mexyle et le composé suivant

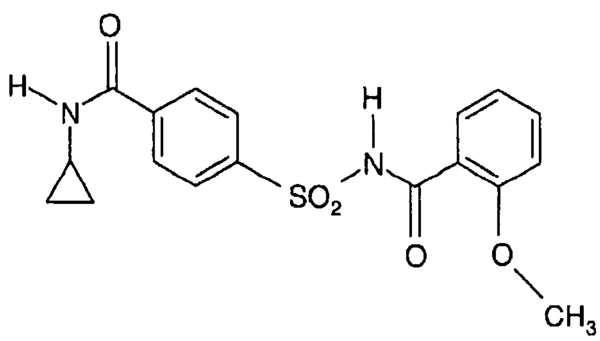

(IV-e-5)

**4.** Utilisation selon la revendication 1, dans laquelle la combinaison de principes actifs contient comme constituant (a) un diamide d'acide phtalique de la formule (II), dans laquelle $X^B$ représente l'iode, $R^{1B}$, $R^{2B}$ et $L^{3B}$ représentent à chaque fois H, $R^{3B}$ représente un groupement $-CH(CH_3)CH_2SO_2CH_3$, $L^{1B}$ représente $CH_3$ et $L^{2B}$ représente iso-$C_3F_7$ et contient comme constituant (b) un composé améliorant la compatibilité aux plantes de culture choisi parmi l'isoxadifen-éthyle, le méfenpyr-diéthyle, le cloquintocet-mexyle et le composé suivant

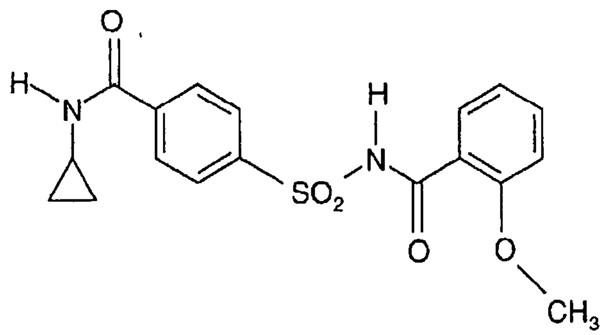

(IV-e-5)

5. Procédé pour combattre des insectes et/ou des acariens, **caractérisé en ce que** l'on laisse agir un agent comme défini dans l'une quelconque des revendications 1 à 4 sur des insectes et/ou des araignées et/ou leur biotope.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0919542 A
- EP 1006107 A
- WO 0100575 A
- WO 0100599 A
- WO 0146124 A
- JP 2001335559 A
- WO 0102354 A
- WO 0121576 A
- WO 02088074 A
- WO 02088075 A
- WO 02094765 A
- WO 02094766 A
- WO 02062807 A
- WO 02087334 A
- WO 9966795 A
- US 6251827 B


### In der Beschreibung aufgeführte Nicht-Patentliteratur


- **COLBY, S.R.** Calculating Synergistic and Antagonistic Responses of Herbicide Combinations. *Weeds,* 1967, vol. 15, 20-22